# EUROPEAN PATENT SPECIFICATION

(11) **EP 0 442 121 B1**
(45) Date of publication and mention of the grant of the patent: **21.06.1995**
(21) Application number: 90125047.2
(22) Date of filing: 20.12.1990
(51) Int. Cl.: G01P 3/488, G01P 3/487, G01P 3/44

(54) **Gearing system comprising a rotational speed sensor**
Antriebssystem mit Rotationsgeschwindigkeits-Sensor
Système d'engrenages comprenant un capteur de vitesse de rotation

(30) Priority: 12.01.1990 US 463737
(43) Date of publication of application: 21.08.1991
(73) Proprietor: ROCKWELL INTERNATIONAL CORPORATION, Pittsburg, Pennsylvania 15222-3123 (US)
(72) Inventor: Peck, David E., Rochester Hills, Michigan 48064 (US); Martin, William D., Rochester Hills, Michigan 48063 (US); Swanson, Glen E., Rochester Hills, Michigan 48309 (US)
(74) Representative: Leiser, Gottfried, Dipl.-Ing.

(56) References cited:
- EP-A- 0 357 870
- GB-A- 2 043 256
- US-A- 3 769 533
- US-A- 3 927 339

## Description

This invention relates to a gearing system comprising a wheel speed sensor for a drive axle and, more specifically a wheel speed sensor for incorporation in an axle requiring minimal modification thereof.

An automotive traction control or adaptive braking system requires intelligence of the speed of the wheels of the vehicle. Existing systems use sensors which require extensive modification to existing drive axles. An example is US-A- 3,769,533 which incorporates circumferentially spaced gear teeth formed on the external surface of the differential case and the axle shaft. These teeth interact with an electromagnetic pickup which is carried in an aperture formed in the axle housing. Extensive modification of the axle housing is required to adapt the magnetic pick-up. In addition, any magnetizable contaminants which may be present in the lubricating oil of the axle are drawn to the magnetic pickup producing a continuous buildup which ultimately results in a magnetic shunt causing system failure. Finally, when electromagnetic pickups are located proximate one another so as to gather wheel speed data in the manner described in US-A- 3,769,533, magnetic interference between pickups results in erroneous signals regarding wheel speeds.

In EP-A-0 357 870 (Designated States: DE, FR, GB, IT, SE) which had been published after the priority date of the present application, a reluctance-type rotational speed sensor is disclosed. This known speed sensor comprises a stator including two coaxial, axially spaced elements. Each of the stator elements has first and seconde radial portions. The first, inner radial portion of each stator element has alternating circumferentially spaced regions offering firsy and second magnitudes of magnetic permeability. The stator elements are in magnetic communication with one another. A magnet is disposed between the stator elements. A rotor is arranged for rotation about an axis. This rotor, too, has alternating circumferentially spaced regions offering first and second magnitudes of magnetic permeability. The rotor, magnet and stator are arranged to form a magnetic flux path whereby a variation in a magnetic flux indicative of the rotational speed of the rotor relative to the stator is induced in the magnetic flux path upon rotation of the rotor. Means are provided for sensing this variation in magnetic flux in sid flux path. According to a gearing system for generating an electrical signal indicative of the speed of rotation of a rotatable differential case of the gearing system. The differential case is disposed in a stationaty carrier and includes an axially extending flange. A normally nonrotatable adjusting ring is arranged coaxially of the flange and arranged to provide axial adjustment of the position of the differential case relative to the carrier. The rotor of the speed sensor is connected to the flange member. The stator is connected to the adjustment ring.

The present gearing system comprising a wheel speed sensor improves upon prior art gearing systems, by utilizing an axially compact design of the sensor to permit efficient adaptation to existing axles while requiring a minimum of modification. The present speed sensor includes a rotor and a stator, each having teeth defining slots, in conjunction with an annular magnet to increase and decrease magnetic flux in the magnetic circuit. Such a structure permits measurement of rotational speed in accordance with the increase and decrease of magnetic flux. The changes in flux generated by the rotor system induces an alternating voltage in a coil of wire in a well known manner to produce signals representative of rotational speed.

Two applications are disclosed. In the first, which is only given by way of example, but does not form part of the claimed invention, a single speed signal corresponding to the average speed of both axle shafts is produced by a single sensor which determines the speed of the differential case. In the second, dual signals which may be used to determine the actual speed of each axle shaft are produced by dual sensors each providing a signal which corresponds with one axle shaft speed and the speed of the differential case.

### BRIEF DESCRIPTION OF THE DRAWINGS

Figure 1 is a perspective view of a typical rotary sensor which may be used with the present invention;
Figure 2 is an exploded view of the sensor shown in Figure 1;
Figure 3 is a sectional view taken along III-III of the sensor shown in Figure 1;
Figure 4 is a view of the sensor shown in Figure 3 mounted in a differential case adjusting ring to measure differential case speed; and
Figure 5 is a view of dual sensors mounted, in accordance with the present invention, in a differential housing driven by the differential case and an axle shaft.

### DESCRIPTION OF THE PREFERRED EMBODIMENTS

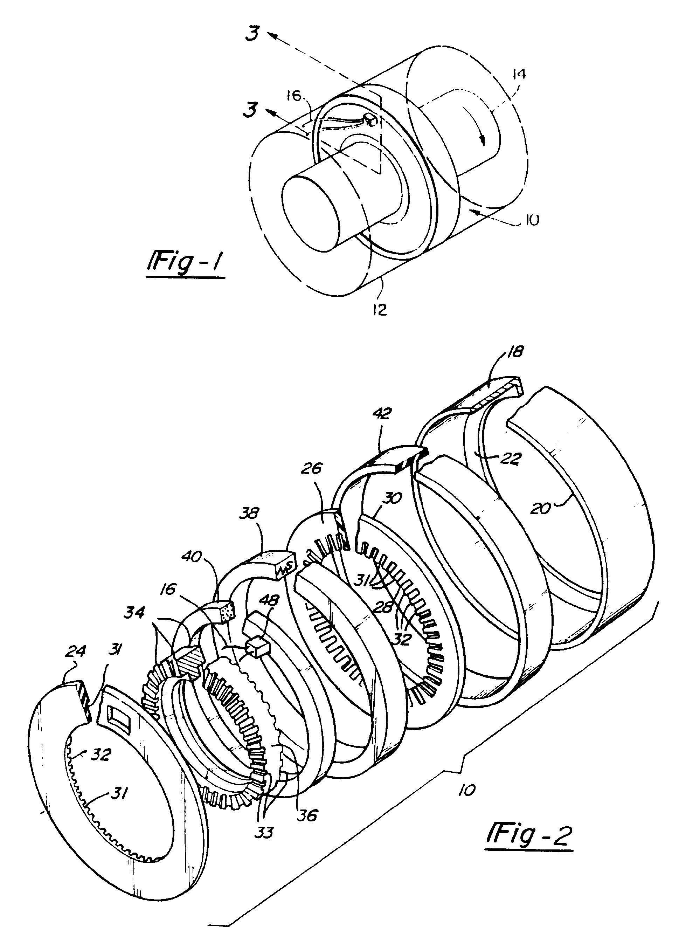

The preferred embodiment of the present invention includes an annular rotational speed sensor incorporated into an axle housing. An example of a suitable sensor is indicated generally at 10 in Figure 1.

The sensor is mounted in stationary bore 12, and is driven by rotating shaft 14. Electrical leads 16 come from an internal sensing coil.

As shown in Figure 2, the components of the sensor telescope into sensor retainer 18 from the left edge thereof. Edge 20 is rolled over to cooperate with lip 22 in retaining the sensor components within retainer 18. The double-lipped design shown in Figure 2 is merely one example of suitable retaining means that may be used on sensors incorporated in the present invention. A variety of other retaining means may be used, including adhesives. Annular stator elements 24 and 26 provide a closed magnetic path for magnetic flux extending from inner edge 28 to outer edge 30. Circumferentially spaced, radially disposed teeth 32 and slots 31 are formed on the inner faces of stator elements 24 and 26, and act in conjunction with corresponding teeth 34 and slots 33 formed in rotor 36 to provide the means for sensing rotational speed. Axially poled annular magnet 38 provides magnetic flux for sensor 10. A sensing coil, shown encapsulated at 40, consists of a simple multi-turn winding having an axis coincident with the axis of the assembled sensor. Lead wires 16 extend from the two ends of coil 40 to connect the alternating voltage representing rotational speed signals to an external signal processing unit (not shown).

In this exemplary embodiment, rotor 36 is driven by shaft 14. Rotor 36 nests within coil 40, and the rotor-coil combination nests coaxially within magnet 38. This assembly in turn is located coaxially with and between stator elements 24 and 26.

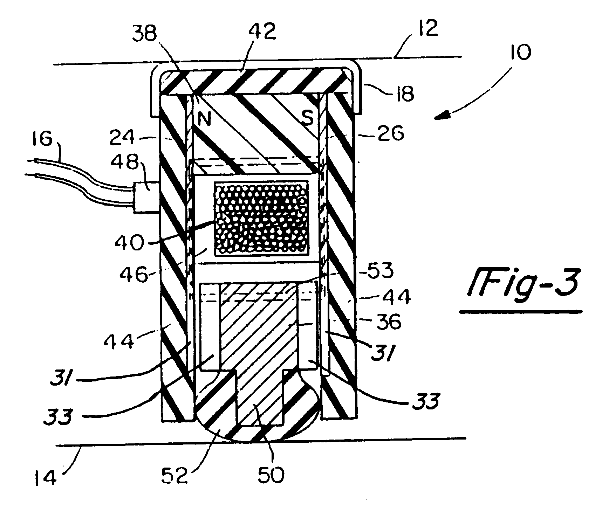

Figure 3 is a sectional view of the sensor shown in Figure 1. In this view, the nesting relationship of rotor 36, coil 40 and magnet 38 is shown. Stator elements 24 and 26 are relatively thin members, made of, for example, 22 gauge 1010 steel. In the design shown, the stator elements 24 and 26 are backed by a layer of a non-magnetic material such as injection-molded plastic, as indicated at 44. Cooperating lips of retainer 18 may be used to retain the sensor components therein. This particular cross section of the stator elements 24 and 26 shows a slot at 31 in each stator element. Teeth and slots in the stator elements may be formed by a variety of methods including stamping or etching. In the final construction, slots 31 are preferably filled with backing material 44. Filling the slots presents a smooth continuous surface on the inner face of each stator element, so that if the rotor 36 rubs against it no damage will occur. Coil 40 is shown encapsulated by bobbin 46. Connections to the ends of coil 40 are made by lead wires 16, which exit through strain relief 48 on bobbin 46. Stator element 24 and backing material 44 are provided with an opening to allow strain relief 48 to pass therethrough. Rotor 36 is slightly thinner than the space between the stator elements 24 and 26 to provide axial running clearance, and the outer diameter of rotor 36 is less than the inner diameter of coil 40 to provide radial clearance.

Several techniques can be used to fabricate rotor 36. For example, rotor 36 may be a one-piece element, or may comprise two halves oriented with outwardly-facing teeth to operate in the same manner as the one-piece rotor. The rotor is preferably encapsulated in plastic or other suitable material (for example, backing material 44) such that slots 33 are filled flush offering a flat profile.

Hub 50, shown on the inside diameter of rotor 36, retains elastomeric ring 52. Ring 52 serves four functions. First, it provides a friction drive between shaft 14 and rim 50 of rotor 36. Second, it provides vibration isolation of the rotor relative to its driving member. Third, the area of contact between stator elements 24, 26 and ring 52 provides a running seal to keep contaminants out of the magnetic flux path and away from the moving parts of sensor 10. Fourth, compression of the ring at the stator element sealing surface provides a centering force for rotor 36, tending to keep the rotor from contacting the stator elements 24 and 26.

Friction drive of the rotor via ring 52 is the preferred drive means for the rotational speed sensor; other drive means, however, including tangs or keys engaging slots on the rotating shaft, could also be used, with or without a seal.

A closed toroidal magnetic flux path 53 (which prevents magnetizable containments from being attracted to the sensor) is thus established around coil 40 and proceeds axially from one face of magnet 38 to one adjacent stator element, radially through the stator element, axially into rotor 36 and out of rotor 36 into the other stator element, and finally radially through this second stator element and back into magnet 38. As rotor 36 rotates, the rotor and stator teeth 34 and 32 move into and out of juxtaposition to alternately decrease and increase the magnetic reluctance of the magnetic path. The change in reluctance increases and decreases the magnetic flux in the magnetic path. This change in flux generates a voltage in coil 40 in accordance with known principles. The output voltage on leads 16 will be an alternating voltage with an amplitude proportional to the speed of rotation, and a frequency equal to the speed of rotation times the number of teeth in 360 degrees.

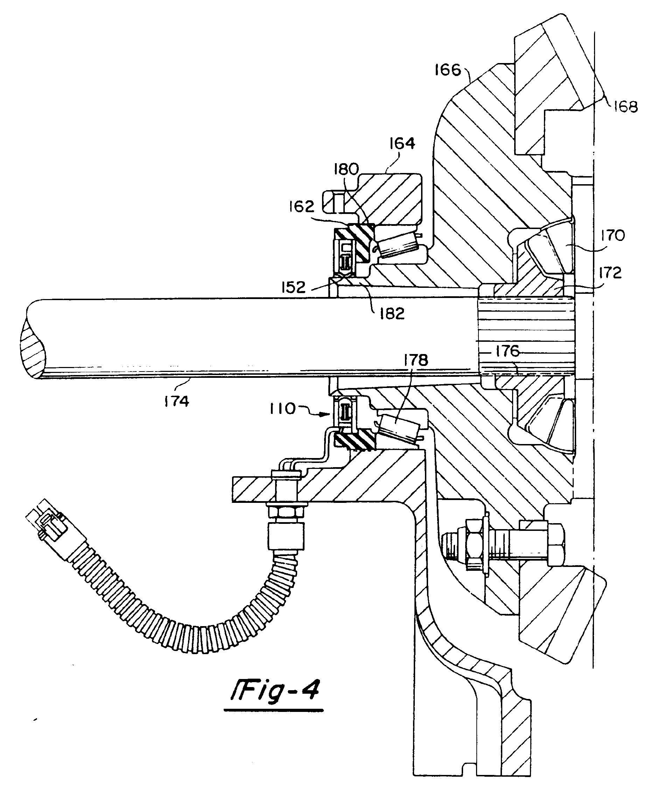

One application for a flat, compact speed sensor is for measurement of wheel speed in a driving axle of a vehicle. Figure 4 shows a sensor 110 nested within a differential case adjusting ring 162. Axle carrier 164 is stationary, and connected to a vehicle through the suspension system. Differential case 166 carries a ring gear 168 and is rotatable driven by a pinion. Differential case 166 also carries differential side gears 170 and 172, which turn axle 174 through cooperating splines 176.

Tapered roller bearing 178 and a similar bearing (not shown) on the other side of axle shaft 174 allow differential case 166 to rotate freely. Adjusting ring 162 and a similar ring on the other end of axle shaft 174 retain and position differential case 166 through the tapered roller bearings 178 in the axle carrier 164. Adjusting ring 162 is externally threaded as seen at 180 and screws into the stationary axle carrier 164. By means of the two adjusting rings, ring gear 168 is properly positioned relative to the drive pinion. The adjusting rings have castellations which are used to lock the position of the respective adjusting ring with a key or pin. Flanged portion 182 on differential case 166 extends out between adjusting ring 162 and axle shaft 174.

Speed sensor 110 and adjusting ring 162 are sized for a light press fit of sensor 110 into adjusting ring 162. An adhesive may also be used for a more secure fit. Elastomeric ring 152 slides over the outside of flange 182 on differential case 166. Flange 182 is long enough to protect sensor 110 from being damaged when axle shaft 174 is put into the axle assembly.

As mentioned previously, friction drive of the rotor via the elastomeric ring is the preferred drive means for the rotational speed sensor. Friction drive makes assembly easy, and it eliminates alignment problems associated with locking the rotor to the driving element. Tang drive is possible, but requires extremely close tolerances to avoid backlash, which could give erroneous speed signals.

Tang drive would be required, however, in certain circumstances where high drive torque required might be greater than the frictional torque produced by the friction drive means. In such a circumstance, a combination of friction drive and tang drive is preferred.

Sensor 110 thus measures the speed of rotation of the differential case. If the vehicle is not turning a corner, both differential case 166 and the wheels (not shown) are rotating at the same angular speed. If the vehicle is turning, the outside wheel turns faster than the inside wheel, and the differential case 166 turns at the average speed of the two wheels on that axle (assuming only two wheels on the axle). An antilock braking or traction control system can utilize the differential case speed to control the brakes on that axle.

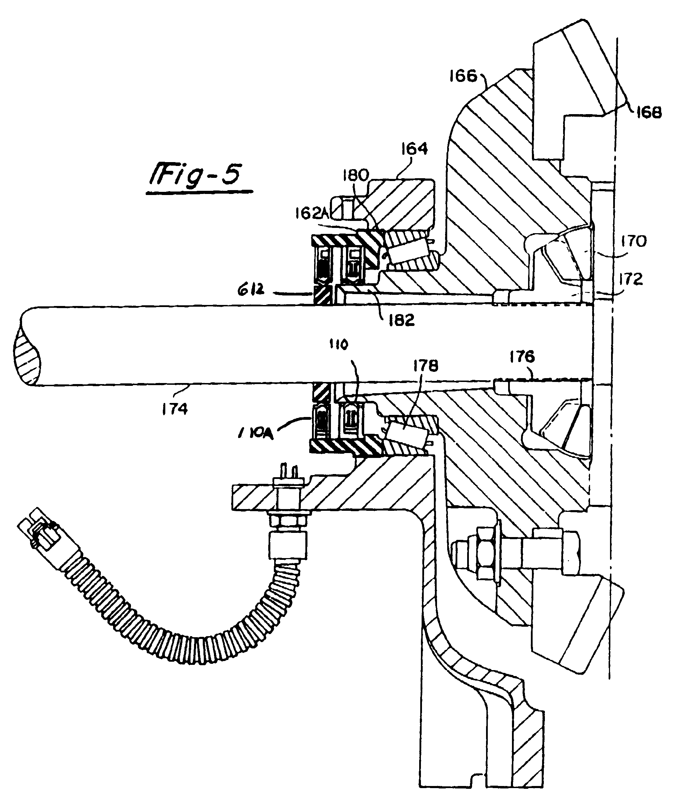

According to the invention, the same basic concept can also be used for anti-skid braking control or traction control wherein the actual speed of both wheels or axle shafts on an axle is required. One arrangement of components to accomplish this task is shown in Figure 5 which illustrates sensors 110 and 110A installed in a modified adjuster ring 162A which permits installation of both sensors on the same side of the axle. The first sensor 110 is installed as previously shown in Figure 4 and thereby measures the speed of rotation of the differential case which is turning at the average speed of the two axle shafts on that axle. The second sensor 110A is also installed in the modified adjuster ring 162A. The rotor of sensor 110A compliantly engages annular ring 612 which is secured to axle shaft 174 to accomplish frictional drive thereof. Thus, sensor 110A measures the speed of rotation of the axle shaft 174. Knowing one axle shaft speed and the average of the two axle shaft speeds, both axle shaft speeds may be determined by the formula; two times the average minus the known axle shaft speed equals the unknown axle shaft speed. Using this technique, a single sensor location on one side of the axle housing, is required. In addition, installation and maintenance of the sensor is simplified. A further simplification is accomplished by connecting the stators of the two sensor assemblies to achieve a single sensor assembly. Such an assembly could then be installed as one unit.

One skilled in the art will readily recognize that certain specific details shown in the foregoing specification and drawings are exemplary in nature and subject to modification without departing from the teachings of the disclosure. Various modifications of the invention discussed in the foregoing description will become apparent to those skilled in the art. All such variations are properly considered within the scope of the invention which is defined only by the appended claims.

## Claims

1. A gearing system comprising a rotational speed sensor (10, 110, 110A) and drivingly engaging first and second axle shafts (174) having a rotatable differential case (166) disposed in a stationary carrier (164), said differential case (166) including a rotatable axially extending flange member (182) and a normally nonrotatable adjusting ring (162, 162A) arranged coaxially of said flange member (182) and arranged to provide axial adjustment of the position of the differential case (166) relative to said carrier (164), said speed sensor (10, 110, 110A) comprising: a first annular rotor (36) drivingly connected to said flange member (182) and a second annular rotor (36) drivingly connected to one of said first and second axle shafts (174); a first and second stator respectively disposed proximate said first and second rotor (36); each of said rotors (36) being provided with circumferentially spaced teeth (34) and slots (33) for alternately changing the flux in a magnetic flux path including the respective rotors (36) and stators (24, 26); first means (40) for generating a first electrical signal indicative of the speed of rotation of said first rotor (36) relative to said first stator (24, 26) and second means (40) for generating a second electrical signal indicative of the speed of rotation of said second rotor (36) relative to said second stator (24, 26);
characterized by
each of said first and second stators comprising two annular stator elements (24,26); said first and second rotor (36) respectively being located coaxially within a first and a second stator element (24, 26); each of said first and second stator elements having circumferentially spaced teeth (32) and slots (31) respectively cooperating with said teeth (34) and slots (33) of said first and second rotor (36) for alternately changing said flux; said teeth (34, 32) and slots (33, 31) of said rotors (36) and said stator elements (24, 26) being radially disposed on opposing surfaces of the respective parts; said adjusting ring (162, 162A) including an axial flange extending in a direction axially away from said differential case (166); and said first and second stator (24, 26) each being connected to said adjusting ring axial flange.

2. The gearing system of claim 1 wherein said first and second respective rotors (36) and stators (24, 26) form first and second closed magnetic flux paths (53).

3. The gearing system of claim 2 further comprising means (52) for sealing said rotors (36) and stators (24, 26) to keep out contaminants.

4. The gearing system of claim 1 wherein said first and second stators are connected to provide a single sensor assembly.

5. The gearing system of claim 1 wherein said second rotor (36) is drivingly connected to an annular member (612) disposed coaxially about said one of said first and second axle shafts (174).

## Patentansprüche

1. Getriebesystem mit einem Drehgeschwindigkeits-Sensor (10, 110, 110A), das mitnehmend an einer ersten und einer zweiten Antriebswelle (174) mit einem drehbaren Differentialgehäuse (166) angreift, das in einem feststehenden Träger (164) angeordnet ist, wobei das Differentialgehäuse (166) ein drehbares, sich axial erstreckendes Flanschelement (182) und einen normalerweise nicht drehbaren Einstellring (162, 162A) aufweist, der koaxial mit dem Flanschelement (182) und zur Bereitstellung einer axialen Einstellung der Stellung des Differentialgehäuses (166) relativ zu dem Träger (164) angeordnet ist, wobei der Geschwindigkeits-Sensor (10, 110, 110A) umfaßt: einen ersten ringförmigen Rotor (36), der triebschlüssig mit dem Flanschelement (182) verbunden ist, und einen zweiten ringförmigen Rotor (36), der triebschlüssig mit der ersten oder der zweiten Antriebswelle (174) verbunden ist; einen ersten und einen zweiten Stator, die in der Nähe des ersten bzw. des zweiten Rotors (36) angeordnet sind; wobei jeder der Rotoren (36) mit in Umfangsrichtung voneinander beabstandeten Zähnen (34) und Schlitzen (33) versehen ist, um den Fluß in einem die jeweiligen Rotoren (36) und Statoren (24, 26) umfassenden Magnetflußweg abwechselnd zu verändern; ein erstes Mittel (40) zum Erzeugen eines ersten elektrischen Singals, welches die Drehgeschwindigkeit des ersten Rotors (36) relativ zu dem ersten Stator (24, 26) angibt, und ein zweites Mittel (40) zum Erzeugen eines zweiten elektrischen Signals, das die Drehgeschwindigkeit des zweiten Rotors (36) relativ zu dem zweiten Stator (24, 26) angibt;
dadurch gekennzeichnet,
daß sowohl der erste als auch der zweite Stator jeweils zwei ringförmige Statorelemente (24, 26) umfaßt, wobei der erste bzw. der zweite Rotor (36) koaxial zwischen einem ersten und einem zweiten Statorelement (24, 26) angeordnet ist; daß die ersten und die zweiten Statorelemente in Umfangsrichtung voneinander beabstandete Zähne (32) und Zähne (31) aufweisen, die mit den Zähnen (34) und den Schlitzen (33) des ersten bzw. des zweiten Rotors (36) zusammenwirken, um abwechselnd den Fluß zu verändern; daß die Zähne (34, 32) und Schlitze (33, 31) der Rotoren (36) und der Statorelemente (24, 26) radial auf einander gegenüberliegenden Seiten der jeweiligen Teile angeordnet sind; daß der Einstellring (162, 162A) einen axialen Flansch umfaßt, der sich in einer Richtung axial von dem Differentialgehäuse (166) weg erstreckt; und daß der erste und der zweite Stator (24, 26) jeweils mit dem axialen Flansch des Einstellringes verbunden sind.

2. Getriebesystem nach Anspruch 1, bei dem der erste bzw. der zweite Rotor (36) und die Statoren (24, 26) einen ersten und einen zweiten geschlossenen Magnetflußweg (53) bilden.

3. Getriebesystem nach Anspruch 2, zusätzlich enthaltend ein Mittel (52) zum Abdichten der Rotoren (36) und der Statoren (24, 26), so daß Verunreinigungen herausgehalten werden.

4. Getriebesystem nach Anspruch 1, bei dem der erste und der zweite Stator miteinander verbunden sind, um eine einzige Sensoranordnung auszubilden.

5. Getriebesystem nach Anspruch 1, bei dem der zweite Rotor (36) triebschlüssig mit einem ringförmigen Element (612) verbunden ist, das koaxial auf der besagten ersten oder zweiten Antriebswelle (174) angeordnet ist.

## Revendications

1. Système à engrenage comprenant un capteur de vitesse de rotation (10, 110, 110A) en prise avec un premier et un second arbre d'essieu (174) qu'il entraîne et qui comporte une coquille de différentiel rotative (166) disposée dans un support fixe (164), la coquille de différentiel (166) comportant un élément formant rebord (182) rotatif s'étendant axialement et une bague de réglage (162, 162A) normalement non-rotative coaxiale avec l'élément formant rebord (182) et disposée de façon à permettre un réglage axial de la position de la coquille de différentiel (166) par rapport au support (164), le capteur de vitesse (10, 110, 110A) comportant en outre : un premier rotor annulaire (36) relié à l'élément formant rebord (182), qu'il entraîne et un second rotor annulaire (36) relié à l'un des premier et second arbres d'essieu (174) ; un premier et un second stators disposés respectivement à proximité du premier et du second rotors (36) ; chacun des rotors (36) étant pourvu sur leur circonférence de dents (34) espacées et de fentes (33) pour changer en alternance le flux dans un trajet de flux magnétique comprenant les rotors (36) et les stators (24, 26) respectifs ; des premiers moyens (40) pour produire un premier signal électrique qui indique la vitesse de rotation du premier rotor (36) par rapport au premier stator (24, 26) et des seconds moyens (40) pour produire un second signal électrique qui indique la vitesse de rotation du second rotor (36) par rapport au second stator (24, 26) ; caractérisé par chacun des premier et second stators comprenant deux éléments de stator annulaire (24, 26) ; les premier et second rotors (36) étant respectivement situés de façon coaxiale à l'intérieur d'un premier et d'un second éléments de stator (24, 26) ; chacun des premier et second éléments de stator ayant sur leur circonférence, des dents (32) espacées et des fentes (31) coopérant respectivement avec les dents (34) et les fentes (33) du premier et du second rotors (36) pour changer en alternance le flux ; les dents (34, 32) et fentes (33, 31) des rotors (36) et des éléments de stator (24, 26) étant disposées de façon radiale sur des surfaces opposées des parties respectives ; la bague de réglage (162, 162A) comprenant un rebord axial s'étendant selon un sens axial à distance de la coquille de différentiel (166) ; et le premier et second stators (24, 26) étant reliés chacun au rebord axial de la bague de réglage.

2. Système à engrenage selon la revendication 1 dans lequel les premier et second rotors (36) et stators (24, 26) forment des premier et second trajets (53) fermés de flux magnétique.

3. Système à engrenage selon la revendication 2 comprenant également des moyens (52) pour réaliser l'étanchéité entre rotors (36) et stators (24, 26) afin d'éviter l'entrée de contaminants.

4. Système à engrenage selon la revendication 1 dans lequel les premier et second stators sont reliés l'un à l'autre pour constituer un assemblage unique de capteur.

5. Système à engrenage selon la revendication 1 dans lequel le second rotor (36) est relié à un élément annulaire (612) disposé coaxialement autour d'un des premier et second arbres (174) de l'essieu, de façon à être entraîné par celui-ci.
